# EUROPEAN PATENT SPECIFICATION

(11) **EP 3 465 052 B1**
(45) Date of publication and mention of the grant of the patent: **09.03.2022**
(21) Application number: 17740129.6
(22) Date of filing: 01.06.2017
(51) Int. Cl.: F28D 15/02

(54) **THE METHOD OF MANUFACTURING OF HEAT PIPES FOR HEATING SYSTEMS**
VERFAHREN ZUR HERSTELLUNG VON WÄRMEROHREN FÜR HEIZUNGSANLAGEN
PROCÉDÉ DE FABRICATION DE CALODUCS POUR SYSTÈMES DE CHAUFFAGE

(30) Priority: 04.06.2016 PL 41743416
(43) Date of publication of application: 10.04.2019
(73) Proprietor: Wójcik, Marek, 43-512 Bestwina (PL); Garus, Jerzy Zdzislaw, 43-502 Czechowice-Dziedzice (PL)
(72) Inventor: WÓJCIK, Janusz, 43-512 Bestwina (PL); WÓJCIK, Pawel, 31-313 Kraków (PL); WÓJCIK, Marek, 31-313 Kraków (PL); GARUS, Jerzy Zdzislaw, 31-313 Kraków (PL)
(74) Representative: Kancelaria Eupatent.pl Sp. z.o.o
(86) International application number: PCT/PL2017/000060
(87) International publication number: WO 2017/209633

(56) References cited:
- GB-A- 2 427 681
- JP-A- H10 238 974
- JP-A- S62 196 595
- US-A1- 2005 051 259
- US-A1- 2007 074 395
- US-A1- 2009 178 784

## Description

The subject of the invention is the method of manufacturing of heat pipes for heating systems in which one end is previously tightly closed and subjected to the leak test of the joint performed at one of the ends and filled with gas from the refrigerating gases series.

There are known methods of closing the internal channel in pressed aluminium profiles by welding, pressure welding or driving-in sealing elements using the elastic deformation of material, however, they do not provide a satisfactory level of tightness of the refrigerating gas closure and they cannot be used for heating systems, since the sealing elements based on the elastic deformation, used to date, do not guarantee long-lasting tightness, which period is specified for at least 10 years, in the heating element operating conditions at the constantly dynamically changing pressure of the agent closed inside the profile.

A prior art publication of JPS62196595 discloses sealing an operating liquid of a heat pipe in a short time so as not to generate leakage by a method wherein a resistance spot welder, whose upper and lower electrodes are attached to the operating liquid sealing port of a metallic heat pipe, is provided to caulk the sealing port by the both electrodes under pressure while effecting resistance welding.

Similarly, application of aluminium welding for this purpose is a highly complicated process requiring a perfectly clean surface and the use of uncontaminated shielding gases, and sealing the gas from the refrigerating series without the use of additional processes preventing the contact of the gas with the weld is unfeasible at the current state of the art.

The most advantageous technology which can be applied for tight sealing of a heat pipe is the technology of aluminium profile welding that requires high electrical and force parameters, consisting in plasticisation of the contact surfaces and their mechanical bonding, which at dynamically changing dimensions in the operation cycle of the heat pipe element resulting from the thermal expansion does not guarantee the sealing tightness within time.

The purpose of the invention is to develop a method of manufacturing of heat pipes for heating systems that shall guarantee durable and tight sealing of the heat pipe aluminium profile with the refrigerating gas inside the internal channel of the profile at both sides, which is essential for the devices known from the state of the art operating with the phase transition phenomenon.

The invention is represented by a method of manufacturing of heat pipes for heating systems, in which one end is previously tightly sealed with a weld and subjected to the leak test of the joint which method is defined by the features of claim 1.

The method of tight closing of the aluminium profile with gas from the refrigerating series is presented in embodiments.

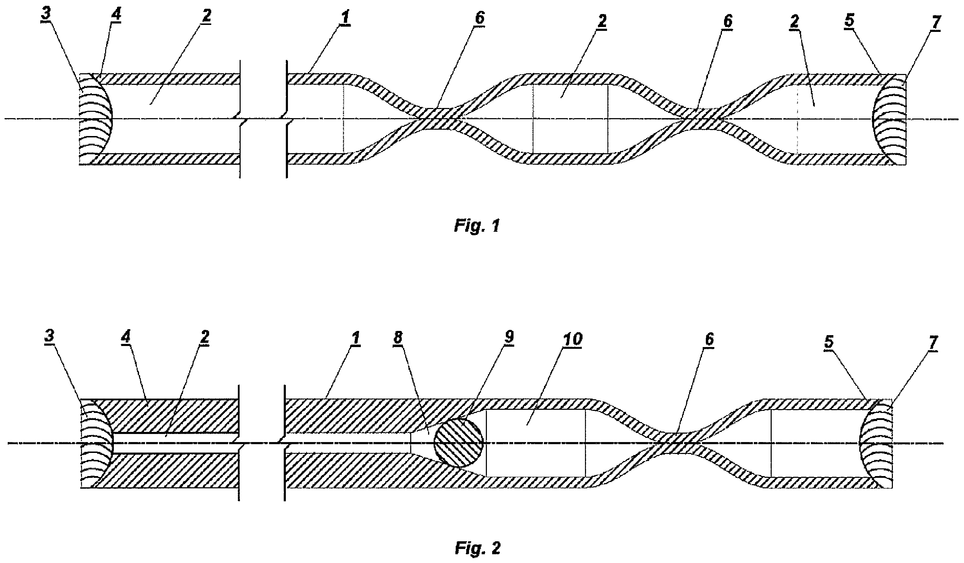

Example (shown in figure 1) which does not represent this invention. . A multi-channel aluminium profile 1 of the length of 7 m of the cross-section of 900 mm² of one channel 2, previously sealed 3 with the method of welding and subjected to the joint leak test at one of the ends 4, is installed with its other end 5 in the dosing head dimensionally adapted to maintain tightness of the system in which pumping out of the gas content of the channels from the inside of the profile is performed to obtain the vacuum of 50 mbar. Then the gas from the refrigerating gases series is introduced in such an amount that two phases of the agent are present in the channels. The created profile system 1 is transported together with the dosing head under the pressure welding machine electrodes and welds are made along the external surface of the profile in the distance of 10 mm and 30 mm from the dosing head so that the internal channels are flattened and welded 6 sealing the gas inside the profile. After the dosing head is disassembled, the end 5 being the location of the agent introduction is sealed with a weld 7.

### Embodiment 1 (shown in figure 2).

In a single-channel aluminium profile 1 of the length of 3.5 m of the cross-section of 900 mm² of the channel 2 sealed with a tight weld 3 at one of the ends 4 an internal cylindrical opening 10 coaxial to the opening 2 with a conical end 8 of the cone convergence of 45° per side to the depth of 55 mm is performed. Then the aluminium profile 1 is installed in the dosing head dimensionally adapted to the profile 1 to maintain tightness and the gas content of the channel is pumped out to obtain the vacuum of 100 mbar, and then the refrigerant in the amount sufficient to obtain two physical states is introduced. After filling with the agent from the inside of the head, the internal channel 2 is plugged with a ball 9 of dimensions adapted to the performed opening 10 so that the ball is located in the conical section of the opening 8 and is settled at the elastic limit of the material. After the dosing head is disassembled, the aluminium profile 1 is subjected to pressure welding on the welding machine so that the internal opening 10 is flattened and welded 6, sealing the gas inside the profile within the distance of 3 mm from the plugging element. After the dosing head is disassembled, the end 5 being the location of the refrigerant introduction is sealed with a weld 7.

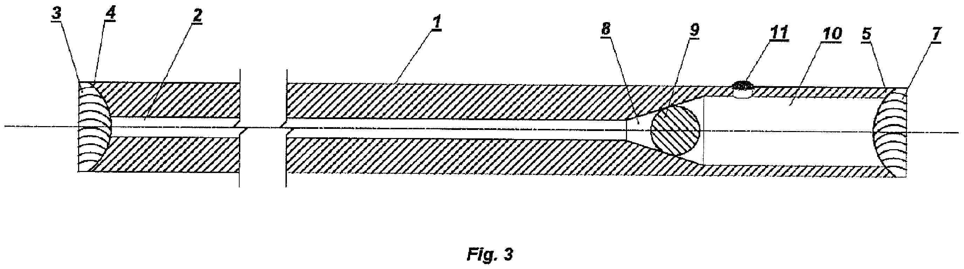

### Embodiment 2 (shown in figure 3).

A single-channel aluminium profile 1 of the length of 3.5 m of the cross-section of the internal channel of 900 mm² previously sealed by the method of welding 3 and subjected to the leak test of the joint at one of the ends 4 is subjected to the process of making a cylindrical opening 10 coaxial to the channel 2 with a conical end 8 of the cone convergence of 0° 5' per side for the distance of 95 mm and is installed with the other end 5 in the dosing head dimensionally adapted to maintain the system tightness, through which pumping out of the gas content of the channel from the inside of the aluminium profile 1 is performed to obtain the vacuum up to 0 mbar. Then the aluminium profile 1 is filled with the refrigerant in the amount sufficient to obtain two physical states of the agent, and then the channel 10 is plugged from the inside of the head with a plugging element 9 dimensionally adapted in such a way that this element is located on the elastic limit in the conical section of the opening 8 keeping the agent inside of the channel 2. After removal from the head, a process opening 11 of the cross-sectional area of 0.1 mm² is performed in the external wall of the aluminium profile 1 perpendicularly to the axis of the opening 10 in the distance of 5 mm from the plugging element 9, and then the end 5 is sealed with a weld 7, and then the process opening that releases the shielding gases is sealed with a weld 11.

## Claims

1. A method for manufacturing a heat pipe for a heating system, the method comprising:
• providing an aluminium profile (1) having a length of up to 7 m and comprising an internal channel (2) of a cross-section from 1 to 900 mm² which is sealed (3) at one end (4);
• making, in the aluminium profile (1), a cylindrical opening (10), the opening (10) being coaxial with the internal channel (2) and having a conical end (8);
• installing the aluminium profile (1) in a dosing head that is dimensionally adapted to the aluminium profile (1) to provide tightness;
• pumping gaseous content out of the internal channel (2) to reduce the pressure in the internal channel (2) to below 100 mbar;
• introducing a refrigerant into the internal channel (2), in an amount sufficient to obtain two physical states;
• plugging the internal channel (2) filled with the refrigerant with a plugging element (9) having dimensions corresponding to the cylindrical opening (10), by locating the plugging element (9) in the conical section (8) of the cylindrical opening (10) and settling it at the elastic limit of the material;
• disconnecting the dosing head and sealing the aluminium profile (1) with a weld (7) at the other end (5) of the aluminium profile (1).

2. The method according to claim 1, wherein the aluminium profile (1) comprises a plurality of internal channels (2).

3. The method according to claim 1, wherein the conical end (8) has a cone convergence in a range of 0° 5' to 45° per side to a depth in a range from 5 to 95 mm.

4. The method according to claim 1, wherein the cylindrical element (9) is a ball.

5. The method according to claim 1, further comprising, prior to sealing the aluminium profile (1) with a weld (7) at the other end (5), making an opening having a cross-section area of 0.1 mm² to 25 mm² in the external wall of the channel (2), perpendicularly to a longitudinal axis of the channel (2) and letting out shielding gases from the channel (2).

6. The method according to claim 5, wherein the perpendicular opening is located at a distance of 5 mm from the plugging element (9).

## Patentansprüche

1. Verfahren zum Herstellen eines Wärmerohrs für ein Heizsystem, wobei das Verfahren Folgendes umfasst:
• Bereitstellen eines Aluminiumprofils (1), das eine Länge von bis zu 7 m aufweist und einen Innenkanal (2) mit einem Querschnitt von 1 bis 900 mm² umfasst, der an einem Ende (4) abgedichtet (3) ist;
• Erzeugen einer zylindrischen Öffnung (10) in dem Aluminiumprofil (1), wobei die Öffnung (10) koaxial mit dem Innenkanal (2) ist und ein konisches Ende (8) aufweist;
• Installieren des Aluminiumprofils (1) in einen Dosierkopf, der dimensional an das Aluminiumprofil (1) angepasst ist, um Dichtigkeit bereitzustellen;
• Pumpen von gasförmigem Inhalt aus dem Innenkanal (2), um den Druck in dem Innenkanal (2) auf unter 100 mbar zu reduzieren;
• Einführen eines Kältemittels in den Innenkanal (2), in einer Menge, die ausreichend ist, um zwei physikalische Zustände zu erhalten;
• Verschließen des Innenkanals (2), der mit dem Kältemittel gefüllt ist, mit einem Verschlusselement (9), das Abmessungen aufweist, die der zylindrischen Öffnung (10) entsprechen, indem das Verschlusselement (9) in dem konischen Abschnitt (8) der zylindrischen Öffnung (10) angeordnet und es an der Elastizitätsgrenze des Materials abgesetzt wird;
• Trennen des Dosierkopfes und Abdichten des Aluminiumprofils (1) mit einer Schweißnaht (7) an dem anderen Ende (5) des Aluminiumprofils (1).

2. Verfahren nach Anspruch 1, wobei das Aluminiumprofil (1) eine Vielzahl von Innenkanälen (2) umfasst.

3. Verfahren nach Anspruch 1, wobei das konische Ende (8) eine Konuskonvergenz in einem Bereich von 0 ° 5' bis 45 ° pro Seite zu einer Tiefe in einem Bereich von 5 bis 95 mm aufweist.

4. Verfahren nach Anspruch 1, wobei das zylindrische Element (9) ein Ball ist.

5. Verfahren nach Anspruch 1, ferner umfassend, vor dem Abdichten des Aluminiumprofils (1) mit einer Schweißnaht (7) an dem anderen Ende (5), das Erzeugen einer Öffnung, die einen Querschnittsbereich von 0,1 mm² bis 25 mm² aufweist, in der Außenwand des Kanals (2), senkrecht zu einer Längsachse des Kanals (2) und Ablassen von Schutzgasen aus dem Kanal (2).

6. Verfahren nach Anspruch 5, wobei sich die senkrechte Öffnung in einem Abstand von 5 mm von dem Verschlusselement (9) befindet.

## Revendications

1. Procédé permettant la fabrication d'un caloduc pour un système de chauffage, le procédé comprenant :
• la fourniture d'un profilé en aluminium (1) possédant une longueur allant jusqu'à 7 m et comprenant un canal interne (2) d'une section transversale de 1 à 900 mm² qui est scellé (3) au niveau d'une extrémité (4) ;
• la réalisation, dans le profilé en aluminium (1), d'une ouverture cylindrique (10), l'ouverture (10) étant coaxiale au canal interne (2) et possédant une extrémité conique (8) ;
• l'installation du profilé en aluminium (1) dans une tête de dosage adaptée dimensionnellement au profilé en aluminium (1) pour assurer l'étanchéité ;
• le pompage du contenu gazeux hors du canal interne (2) pour réduire la pression dans le canal interne (2) en dessous de 100 mbar ;
• l'introduction d'un fluide frigorigène dans le canal interne (2), en une quantité suffisante pour obtenir deux états physiques ;
• l'obturation du canal interne (2) rempli de fluide frigorigène avec un élément d'obturation (9) possédant des dimensions correspondant à l'ouverture cylindrique (10), en positionnant l'élément d'obturation (9) dans la section conique (8) de l'ouverture cylindrique (10) et en le tassant à la limite élastique du matériau ;
• la séparation de la tête de dosage et le scellement du profilé en aluminium (1) avec une soudure (7) au niveau de l'autre extrémité (5) du profilé en aluminium (1).

2. Procédé selon la revendication 1, ledit profilé en aluminium (1) comprenant une pluralité de canaux internes (2).

3. Procédé selon la revendication 1, ladite extrémité conique (8) possédant une convergence de cône comprise dans une plage allant de 0°5' à 45° par côté à une profondeur comprise dans une plage allant de 5 à 95 mm.

4. Procédé selon la revendication 1, ledit élément cylindrique (9) étant une bille.

5. Procédé selon la revendication 1, comprenant en outre, avant de sceller le profilé en aluminium (1) avec une soudure (7) au niveau de l'autre extrémité (5), la réalisation d'une ouverture possédant une section transversale de 0,1 mm² à 25 mm² dans le paroi externe du canal (2), perpendiculairement à un axe longitudinal du canal (2) et laissant s'échapper des gaz de protection du canal (2).

6. Procédé selon la revendication 5, ladite ouverture perpendiculaire étant située à une distance de 5 mm à partir de l'élément d'obturation (9).
